Europäisches Patentamt

European Patent Office

Office européen des brevets

(19)

(11) Numéro de publication : **0 099 276**
**B1**

(12) # FASCICULE DE BREVET EUROPÉEN

(45) Date de publication du fascicule du brevet :
**11.12.85**

(51) Int. Cl.⁴ : **H 04 N 7/093**

(21) Numéro de dépôt : **83401159.5**

(22) Date de dépôt : **07.06.83**

(54) **Procédé d'analyse de données diffusées, analyseur de réseau mettant en œuvre un tel procédé, et équipement de réception utilisant un tel analyseur.**

(30) Priorité : **18.06.82 FR 8210711**

(43) Date de publication de la demande :
**25.01.84 Bulletin 84/04**

(45) Mention de la délivrance du brevet :
**11.12.85 Bulletin 85/50**

(84) Etats contractants désignés :
**DE GB NL**

(56) Documents cités :
**TOUTE L'ELECTRONIQUE, no. 464, mai 1981, pages 40-45, Paris, FR., G. BERTRON: "Les mesures analogiques et automatiques en TV"**
**IEEE TRANSACTIONS ON CONSUMER ELECTRONICS, vol. CE-27, no. 3, août 1981, pages 530-535, IEEE, New York, USA, A. VINCENT et al.: "Telidon teletext system field trials"**
**ELECTRONIC ENGINEERING, vol. 52, no. 633, janvier 1980, pages 61-77, Londres, GB, D. THOMSON: "Designing for consumer electronics - teletext and viewdata"**

(73) Titulaire : **THOMSON-CSF**
**173, Boulevard Haussmann**
**F-75379 Paris Cedex 08 (FR)**

(72) Inventeur : **de Couasnon, Tristan**
**THOMSON-CSF SCPI 173, bld Haussmann**
**F-75379 Paris Cedex 08 (FR)**
Inventeur : **Bellet, Jean-Luc**
**THOMSON-CSF SCPI 173, bld Haussmann**
**F-75379 Paris Cedex 08 (FR)**

(74) Mandataire : **Turlèque, Clotilde et al**
**THOMSON-CSF SCPI 173, Bld Haussmann**
**F-75379 Paris Cedex 08 (FR)**

EP 0 099 276 B1

Jouve, 18, rue St-Denis, 75001 Paris, France

## Description

L'invention se rapporte aux réseaux de diffusion de données et plus particulièrement à un procédé d'analyse des données diffusées et à un outil de test, dit « analyseur de réseau », mettant en œuvre un tel procédé, adapté aux équipements classiques de réception.

Dans un réseau de diffusion de données, réseau de télétexte « ANTIOPE » par exemple, la diffusion des données peut être une diffusion par voie hertzienne, une distribution par câble, ou une diffusion par satellite. Compte tenu de cette diversité et du grand nombre de points de réception, il est apparu le besoin d'un outil de test facile à intégrer à l'équipement de réception, permettant d'effectuer des mesures de qualité de liaison à partir des données reçues et de surveiller le réseau, en visualisant les résultats.

L'invention a pour objet un procédé d'analyse de données diffusées et un analyseur de réseau répondant à ce besoin.

Suivant l'invention, un procédé d'analyse de données diffusées, codées suivant une structure organisée en plusieurs niveaux et destinées à être interprétées par un terminal de visualisation vidéographique, est caractérisé en ce que :

— dans une première phase, l'opérateur commande la sélection des données d'un niveau déterminé et les analyse suivant l'un ou l'autre de plusieurs modes d'analyse, soit un mode dit transparent, pour extraire les paramètres relatifs aux caractéristiques de la transmission présents dans les données transmises, soit un mode, dit programmé, pour mesurer des paramètres relatifs aux conditions de la transmission, soit un mode, dit de capture, pour mettre en mémoire ces données elles-mêmes avant tout traitement ou interprétation ;

— dans une seconde phase, les résultats de l'analyse sont codés en suivant la norme du terminal de visualisation vidéographique, sous forme d'images synthétiques caractérisant les paramètres extraits ou mesurés, ou les données mises en mémoire avant interprétation ;

— et dans une dernière phase les résultats de l'analyse, codés suivant cette norme vidéographique, sont interprétés et visualisés.

L'invention a également pour objet un analyseur de réseau mettant en œuvre un tel procédé.

L'invention sera mieux comprise et d'autres caractéristiques apparaîtront à l'aide de la description qui suit en référence aux figures annexées :

la figure 1 est un schéma d'organisation général d'un équipement de réception pour un réseau de diffusion de données ;

la figure 2 est un schéma plus détaillé d'un mode de réalisation de l'équipement de réception dans lequel est prévu l'analyseur de réseau ;

la figure 3 représente un schéma fonctionnel des tâches réalisées par l'analyseur de réseau ;

la figure 4 est l'organigramme des fonctions d'analyse de cet analyseur ;

la figure 5 est l'organigramme de la tâche clavier de cet analyseur.

Les réseaux de diffusion de données du type télétexte ont pour objet de permettre la visualisation, sur un récepteur de télévision, de textes constitués de caractères alphabétiques et numériques, ou de graphismes simples. Les données correspondantes sont transmises par les émetteurs des réseaux de télévision, soit sur le même canal que les programmes normaux de télévision et sans altérer ces derniers, soit en recourant à un canal spécial. Les utilisateurs doivent disposer d'un téléviseur adapté et d'un équipement terminal associé, pour la démodulation et le décodage, à partir duquel ils peuvent commander l'apparition sur le récepteur d'une page ou d'une succession de pages sélectionnées dans l'ensemble des messages transmis.

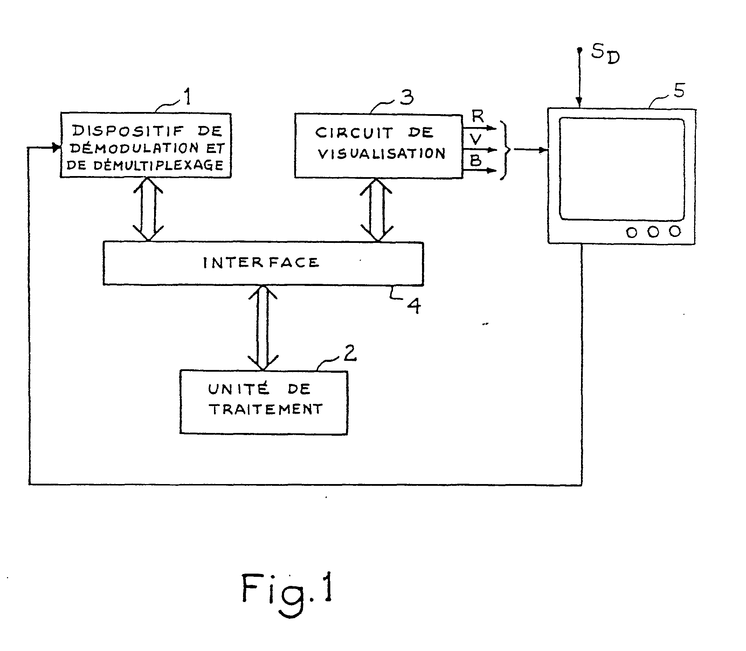

La structure générale d'un équipement terminal d'un réseau de diffusion de données du type télétexte où les données sont transmises par paquets dans un signal multiplexé contenant ces données et le signal vidéo classique, est donnée ci-après en référence à la figure 1.

Un décodeur dont l'entrée est couplée à la sortie $S_D$ de la voie de diffusion délivre sur sa sortie les données diffusées en séparant les données utiles des autres données transitant éventuellement par la même voie de diffusion.

Dans un équipement terminal pour un réseau de télétexte, la partie décodeur comporte un dispositif de démodulation et de démultiplexage 1 qui sépare les données numériques transmises par le réseau de télévision des programmes normaux lorsque ces données sont transmises sur un canal également utilisé pour un programme normal. Le décodeur comporte en outre une unité de traitement des données numériques 2 couplée à la sortie du dispositif de démodulation et de démultiplexage 1 par une interface 4. Enfin l'équipement comporte un circuit de visualisation 3 couplé à la sortie de l'unité de traitement 2 par l'interface 4, qui fournit directement les signaux vidéo de couleur, rouge R, vert V, et bleu B, commandant l'affichage des données sur le tube d'un récepteur 5.

L'analyseur de réseau suivant l'invention est inclus dans cet équipement terminal pour réaliser à la demande des tests, des mesures, ou une surveillance des données transmises par le réseau et reçues par l'équipement ; cet analyseur commande directement le tube récepteur pour visualiser sous une forme synthétique les informations concernant les données numériques acquises, après leur avoir fait subir un traitement qui les met dans une forme adaptée à cet affichage en suivant l'un des modes de fonctionnement reconnus par le terminal pour l'affichage, c'est-à-dire classiquement le mode alphamosaïque, le mode alphagéométrique, ou le mode alphaphotographique.

A cet effet, l'unité de traitement 2 de l'équipement terminal est programmée avec des tâches de traitement des données présentes à la sortie du dispositif de démodulation et de démultiplexage, et des tâches de codage des résultats de ces tâches de traitement pour l'affichage de ces résultats, par l'intermédiaire du circuit de visualisation.

L'équipement terminal lui-même est alors un outil de test des données, un outil de surveillance d'un réseau de diffusion de données, ou encore un outil de mesure de la qualité du niveau de diffusion de données.

En ce qui concerne l'aspect outil de test du matériel, l'analyseur de réseau peut fonctionner en suivant un mode transparent d'analyse et d'affichage des données telles qu'elles sont reçues par le décodeur. Ce type d'analyse de réseau est très utile en particulier lors des étapes de développement et de mise au point d'un équipement de la chaîne de diffusion.

Pour la surveillance d'un réseau, l'analyseur comporte en second lieu des moyens de saisie de tous les paramètres spécifiques du signal de données, et des moyens de visualisation synthétique de l'ensemble de ces paramètres. Cette surveillance est réalisée automatiquement par l'utilisation du dispositif de commande du terminal, par exemple, un clavier de télécommande.

Enfin, pour la mesure de la qualité du niveau de diffusion de données, l'analyseur de réseau comporte en troisième lieu des moyens de mesure, ces mesures étant réalisées au cours de campagnes de mesures. Les points de mesure à l'intérieur du réseau seront choisis d'autant plus facilement pour déterminer l'échantillon représentatif du réseau que chaque téléviseur équipé d'un décodeur adapté constitue un point de mesure possible.

La description qui suit donne un exemple de procédé d'analyse de données diffusées précisant quelques-unes des possibilités offertes par un tel équipement convenablement programmé.

D'un point de vue fonctionnel les tâches de l'analyseur de réseau peuvent être regroupées en deux groupes de tâches :

Les premières, groupées en un processus qui sera dit « processus A », réalisent les fonctions d'analyse proprement dite et de gestion de l'interface avec le circuit de réception.

Les secondes, groupées en un processus qui sera dit « processus B », réagissent aux commandes de l'utilisateur et exploitent les informations issues de l'analyse par le processus A pour synthétiser une image en réponse transmise au tube récepteur.

Fonctionnellement, ces deux processus peuvent être exécutés en parallèle. Mais la puissance de calcul de l'unité de traitement 2 peut être insuffisante pour réaliser convenablement ces deux processus en parallèle lorsque le débit d'informations reçu à l'entrée du dispositif de démodulation 1 est élevé.

La description qui suit concerne une solution dans laquelle ces deux processus sont exécutés séquentiellement ; ce qui permet de conserver une certaine indépendance entre les traitements des données reçues et leurs débits. Cette description n'est nullement limitative.

Les moyens de mise en œuvre de l'analyse de réseau sont voisins de ceux utilisés classiquement pour la réception des données transmises.

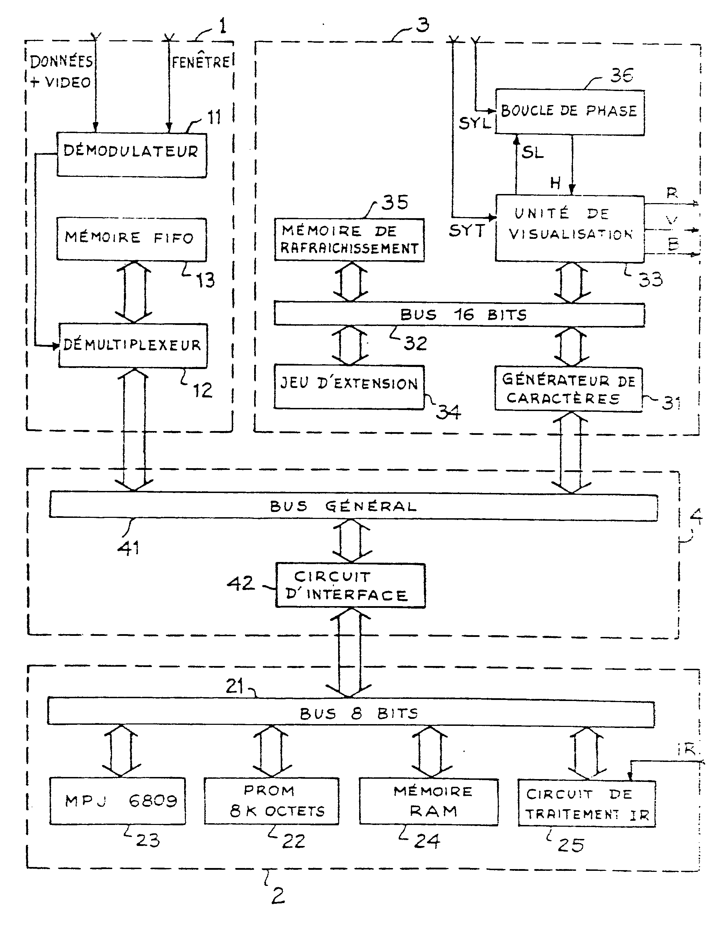

La figure 2 représente en détails ces moyens. Le dispositif de démodulation et de démultiplexage 1 comporte un démodulateur 11 recevant le signal composite (vidéo + données), et un signal de commande (fenêtre) pour la sélection des données à démoduler. La sortie de ce démodulateur est reliée à l'entrée d'un démultiplexeur 12 effectuant la séparation des signaux de données. Les signaux démodulés et séparés sont alors mis en mémoire dans une mémoire FIFO, 13, de laquelle ils sont extraits, sur commande, par l'unité de traitement 2. Pour cela, la sortie du démultiplexeur est couplée via l'interface 4 au bus 21 de l'unité de traitement 2. Cette interface 4 comporte principalement un bus général de transmission de données 41 et un circuit d'interface 42. L'unité de traitement comporte en outre une mémoire de programme PROM 22 de capacité 8K octets par exemple, une unité de traitement MPU 23 constituée par un microprocesseur de type 6809 par exemple, une mémoire à accès aléatoire RAM, 24, et un circuit de traitement des commandes reçues du clavier 25 couplés au bus 21. Le clavier de commande peut émettre par exemple des signaux infra-rouge IR.

Pour l'affichage, les éléments de l'unité de traitement interviennent via l'interface 4 et le circuit de visualisation 3. Ce circuit de visualisation comporte un générateur de caractères 31, couplé au bus général 41 de l'interface 4. Ce générateur est par ailleurs couplé au bus 32 de l'unité de visualisation, auquel est couplée l'unité de visualisation 33 qui fournit les composantes de couleurs R, V, B appliquées au tube, fonction des caractères à afficher. Une mémoire jeu d'extension 34 et une mémoire de rafraîchissement 35 sont également couplées au bus 32. L'unité de visualisation 33 reçoit le signal de synchronisation trame SYT du téléviseur ; le signal de synchronisation ligne SYL de ce même téléviseur est reçu à l'entrée de commande d'une boucle de phase 36 qui fournit le signal d'horloge H à l'unité de visualisation. Cette unité de visualisation fournit un signal de ligne $S_L$ à la boucle de phase 36.

Sans autre précision sur les différents sous-ensembles, ce schéma général pourrait être celui d'un décodeur classique pour un équipement de réception de télétexte, ANTIOPE par exemple.

Ce terminal devient un analyseur de données diffusées si l'on précise que :

— la mémoire de programme 22 comporte un certain nombre de programmes de traitement particuliers destinés à prendre en compte des demandes de traitement lors d'un dialogue avec l'utilisateur dans le cadre d'une procédure de test, interactive ou non, à analyser les données diffusées, à effectuer une synthèse des résultats de cette analyse ;

— la mémoire RAM, 24, a une capacité et une organisation telles qu'elle peut contenir les données nécessaires à ces traitements particuliers ;

— le démultiplexeur 12 qui normalement ne transmet que les informations utiles comporte un coupleur programmable pour transmettre les données correspondant à l'un ou l'autre des niveaux de la norme de diffusion de données susceptibles d'être analysés, par exemple les séquences d'interprétation lorsque le traitement consiste à vérifier ces séquences ;

— le circuit de visualisation comporte un automate de visualisation qui permet d'afficher dans une forme conventionnelle les résultats de tests obtenus après synthèse.

Avec un tel équipement, l'utilisateur peut accéder, via le clavier de commande à trois types de services :

Une analyse de la procédure et du protocole de transmission.

Des mesures de taux d'erreur.

Un contrôle du réseau.

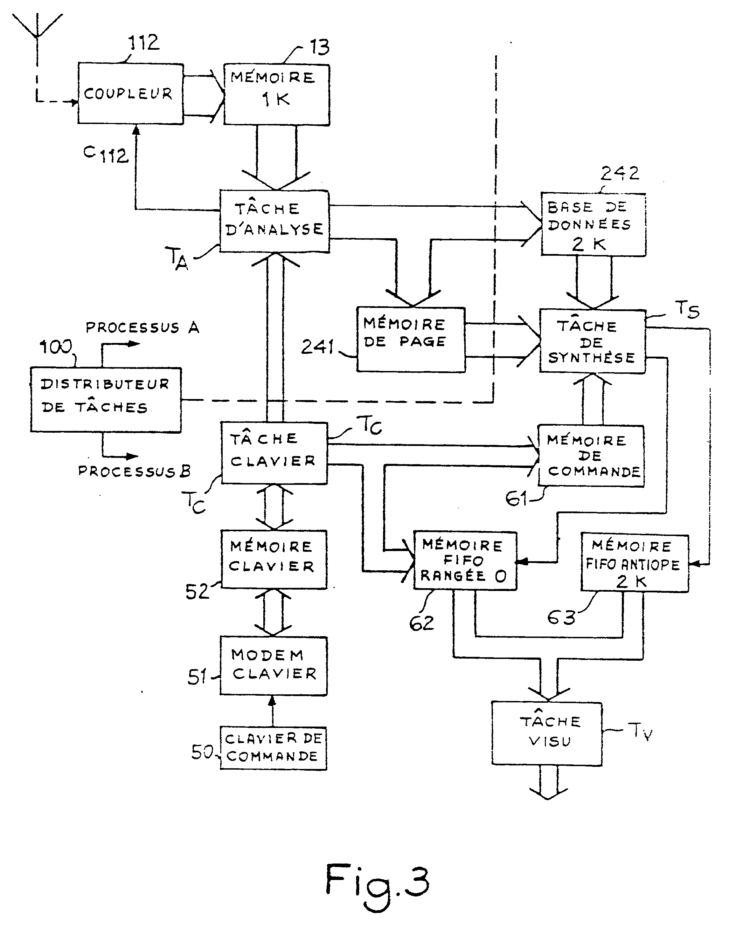

Pour cela la mémoire PROM 22 associée au microprocesseur 23 de l'unité de traitement 2 commande les tâches et les transferts indiqués schématiquement sur la figure 3.

Un distributeur de tâches 100 coordonne l'enchaînement des deux processus et plus précisément l'enchaînement des tâches qui les composent.

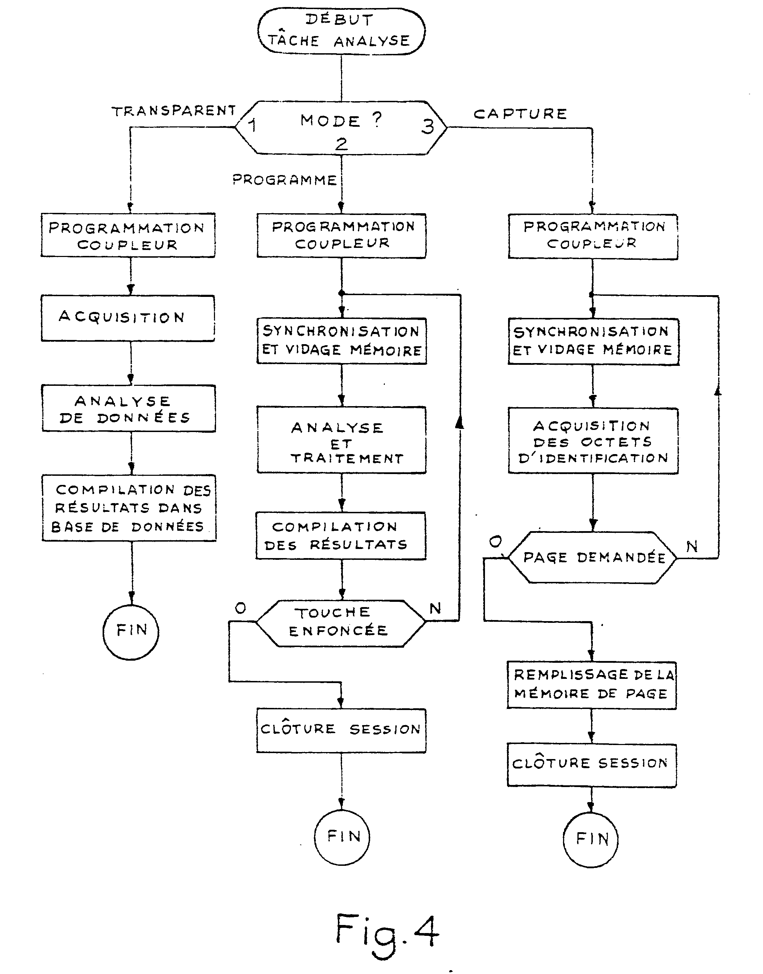

Dans le processus « A », le sélecteur de voies programmable, ou coupleur 112 sélectionne parmi les données qu'il reçoit du démodulateur 11 celles qui doivent être retenues, le sélecteur comportant à cet effet une entrée de commande $C_{112}$. Ces données sélectionnées présentes à la sortie de ce sélecteur sont transmises à la mémoire 13, de capacité 1K octets par exemple. La tâche d'analyse $T_A$, prend ces données dans la mémoire tampon 13 et les analyse suivant l'un des trois modes d'analyse possibles. L'organigramme de cette tâche d'analyse est représenté sur la figure 4 décrite ci-après. Selon le mode envisagé, les données résultant de l'analyse sont transmises à la mémoire RAM 24 (figure 2) soit dans une zone dite base de données 242, soit dans une zone dite mémoire de pages 241. Cet ensemble de fonctions forme le processus A.

Dans le processus B, c'est un clavier de commande 50 qui permet le dialogue avec l'opérateur et permet d'engager les tâches à réaliser. Un modulateur-démodulateur, dit modem clavier, 51 couplé au clavier assure la reconnaissance des données introduites par le clavier ou le retour de questions nécessitant une réponse de l'opérateur dans le cadre d'un dialogue interactif. Une mémoire clavier 52 est couplée à ce modem, cette mémoire clavier fournissant les données nécessaires à la tâche de gestion du clavier $T_C$. Cette tâche clavier est un automate de dialogue avec l'utilisateur qui transmet à la tâche d'analyse (du processus A) ou à la tâche de synthèse $T_S$ (du processus B) l'ensemble des données qui leur sont nécessaires. La tâche de synthèse $T_S$ traite les données en mémoire soit dans la mémoire de page 241, soit dans la base de données 242 sur commande de l'opérateur via la tâche clavier $T_C$ et une mémoire de commande 61. Cette tâche de synthèse $T_S$ fournit les données résultantes à des mémoires FIFO 62 et 63, de l'unité de visualisation respectivement mémoire de rangée 0 et mémoire ANTIOPE de 2K octets suivant la norme habituelle du système de visualisation de la norme ANTIOPE, ces données étant appelées par une tâche de visualisation $T_V$ qui les convertit en signaux de couleur directement applicables au tube de visualisation.

L'ensemble est bien sûr géré par une base de temps générale, non représentée sur la figure 3.

La figure 4 est l'organigramme de la tâche d'analyse dans un mode de réalisation de l'analyseur de réseau suivant l'invention. Comme indiqué ci-dessus, l'analyse peut être faite suivant trois modes possibles.

Le premier est le mode dit « transparent ». C'est le mode dans lequel se trouve l'analyseur lorsque par exemple la touche 1 du clavier est enfoncée. Ce mode, qui est celui mis en œuvre lors de l'initialisation, ne nécessite pas d'information particulière. Dans ce mode, le coupleur 112 ou sélecteur de voies est programmé pour transmettre les données correspondant aux niveaux de données habituels. Après la phase de programmation du coupleur et la phase acquisition des données, un certain nombre de paramètres sont recherchés par la tâche d'analyse dans les données reçues pour la reconnaissance du standard, du protocole, des voies logiques ou magazines présents, de leurs formats, normes, etc. Les résultats peuvent être, par exemple les suivants : 4 magazines sont présents ; les numéros de ces magazines sont 01, 02, 04 et 0C. L'octet de procédure est 7E. Il y a 10 lignes de données par trame qui caractérisent la source, etc. Ces résultats sont rangés dans des tables de données de la base de données durant la phase « compilation des résultats ». La tâche analyse en mode transparent est alors interruptible et se termine si un autre mode d'analyse est demandé.

Le second mode possible d'analyse est un mode dit « programmé ». Dans ce mode au lieu de prendre en compte toutes les données et d'analyser un certain nombre de caractères automatiquement, seulement certaines données sont considérées et traitées suivant un programme défini. L'automate affecté à la gestion du coupleur remplit donc un certain nombre de fonctions de niveau supérieur et décharge l'unité de calcul d'une partie du travail d'interprétation des différentes couches du protocole de diffusion. Le programme peut être par exemple un programme d'analyse des attributs par analyse de la séquence d'interprétation, ou un programme de calcul des taux d'erreurs pour aboutir respectivement à des résultats caractéristiques des modalités du dialogue avec le terminal de visualisation ou caractéristiques de la liaison pour un magazine donné. Dans ce mode, la première étape est bien entendu la programmation adéquate du coupleur sélecteur de voies 112 pour transmettre effectivement les données du niveau à analyser. Dans une deuxième étape, une synchronisation de l'analyse sur le standard reçu est réalisée de façon que ce standard puisse être reconnu. Lorsque cette synchronisation est réalisée, la tâche analyseur traite les données correspondant au magazine sélectionné en analysant les attributs des différents articles (ou pages visualisables) à partir de la séquence d'interprétation. Exemple : type de page : couverture, page de garde, etc. ; nombre de pages ; numéro de page...- ; ou en calculant par exemple des taux d'erreurs par page. Dans la phase suivante les résultats sont compilés dans la base de données. Un test sur le clavier permet de savoir si une autre touche a été enfoncée. Ce mode d'analyse est interrompu au profit de l'un des deux autres ou l'analyse se poursuit suivant le même mode suivant qu'une autre touche a été enfoncée ou pas. Ce mode d'analyse est lié à deux modes de synthèse possibles qui permettent de synthétiser sous forme d'une image les attributs des pages ou les erreurs détectées comme indiqué ci-après.

Le troisième mode possible dit mode « capture » est mis en œuvre pour conserver en mémoire toutes les données relatives à une page d'un magazine telles qu'elles sont transmises avant leur interprétation par le terminal de visualisation. Pour ce mode comme pour les précédents, la première phase est celle de la programmation du coupleur afin qu'il transmette toutes les données reçues, comme elles arrivent. Dans une deuxième phase la tâche analyse réalise la synchronisation sur le magazine sélectionné. Lorsque cette synchronisation est réalisée, les données sont analysées pour l'acquisition des octets d'identification d'une page donnée. Si ces octets ne sont pas ceux de la page demandée l'acquisition se poursuit jusqu'à ce que la page demandée soit trouvée. Dans ce cas, les données de cette page, telles qu'elles sont reçues, sont transmises à la mémoire de page (241 sur la figure 3), et la tâche analyse correspondante est alors terminée. Ce mode permet après synthèse de visualiser le contenu d'une page au niveau de son code, avant interprétation par le terminal de visualisation. Ce mode d'analyse est lié à un mode de synthèse qui permet de mettre en évidence les erreurs de syntaxe au niveau du code proprement dit comme indiqué ci-après.

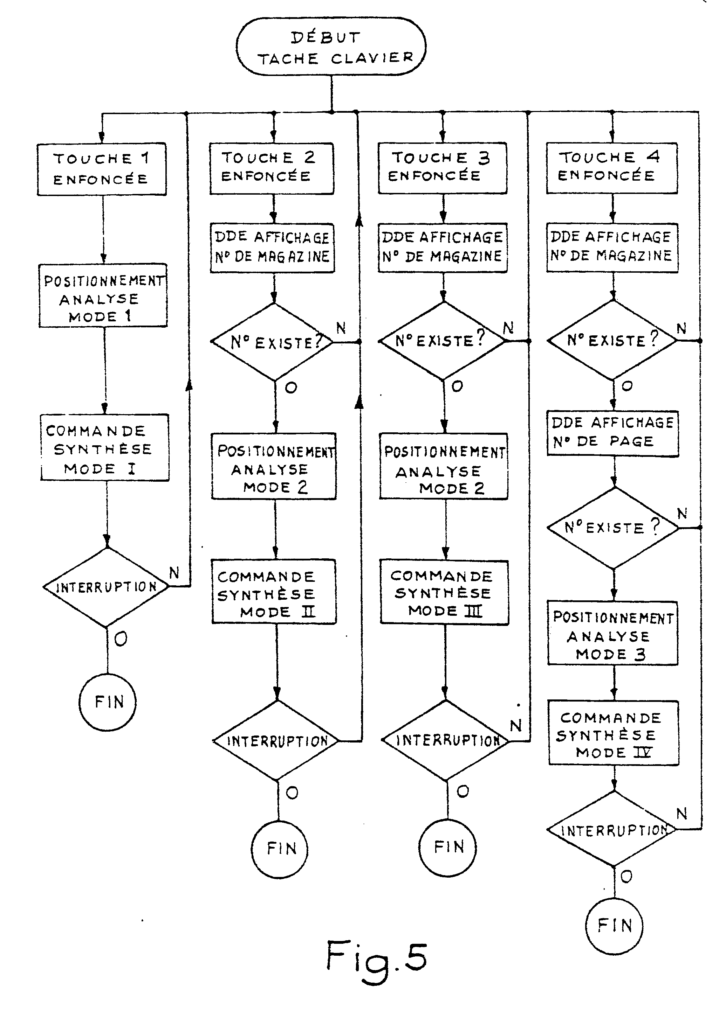

Dans le processus B la première tâche mise en œuvre est la tâche clavier $T_C$ dont l'organigramme est représenté sur la figure 5. Cette tâche reconnaît la nature de l'ordre donné par l'intermédiaire du clavier, à partir de la touche enfoncée, commande le positionnement de la tâche analyse sur le mode correspondant et établit les codes de commande transmis à la mémoire 61 (figure 3) pour l'établissement du programme de commande de la tâche de synthèse $T_S$.

Lorsque la touche 1, par exemple, est enfoncée, l'utilisateur demande une analyse transparente, c'est-à-dire comme indiqué ci-dessus l'analyse de tout ce qui est reçu. La tâche clavier commande le positionnement de l'analyseur en mode transparent, mode I, puis génère les codes de commande pour la tâche de synthèse, $T_S$. Cette tâche de synthèse dans ce mode « dit mode I » consiste à lire dans les tables de la base de données 242 (figure 3) les données qui y ont été stockées et à les coder pour former une image de ces données en suivant le code de description de l'image vidéographique classique. A titre d'exemple, il est possible d'affecter à chaque magazine possible un carré dans une grille formée dans l'image et de colorer ces carrés lorsque les magazines correspondants sont présents. La tâche synthèse établit à partir des données le code vidéographique correspondant.

Lorsque la touche 1 n'est plus enfoncée, la tâche clavier peut être interrompue.

Lorsque la touche 2 est enfoncée, comme indiqué dans l'organigramme de la figure 5, l'utilisateur demande l'analyse de la séquence d'interprétation, c'est-à-dire comme indiqué ci-dessus, l'analyse des attributs des différentes pages d'un magazine donné, la tâche clavier émet en réponse à l'enfoncement de la touche un message en retour vers l'utilisateur pour demander le numéro du magazine pour lequel l'utilisateur souhaite une synthèse vidéographique. La tâche clavier contrôle dans la base de données que le magazine correspondant est bien présent en vérifiant que le numéro de magazine demandé existe (sinon la tâche clavier reprend son état initial), puis positionne l'analyseur en mode 2, c'est-à-dire en mode programmé pour l'analyse des séquences d'interprétation. La tâche clavier génère alors des codes de commande correspondant à la synthèse d'une image associée à cette analyse des séquences d'interprétation, synthèse mode II. Une image peut alors être reconstituée par la tâche de synthèse à partir des informations dans la base de données. Par exemple, une grille de carrés représentant les pages peut être établie, chaque type de page reconnu par ses attributs étant coloré d'une manière différente, par exemple rouge pour une page de couverture, bleu pour une page d'index, blanc pour les pages normales numérotées.

Lorsque la touche 3 est enfoncée, l'utilisateur demande une analyse de taux d'erreur ; comme pour l'analyse des séquences d'interprétation, la tâche clavier demande le numéro du magazine concerné et vérifie que ce magazine existe bien. Si oui, la tâche clavier commande le positionnement de l'analyse en mode programmé, mode 2, pour l'analyse du taux d'erreur, les données résultantes étant mises en mémoire dans la base de données. Pour la synthèse d'une image vidéographique correspondant à ce mode, la tâche clavier établit les codes de commande pour la synthèse correspondante, mode III. Par exemple, une échelle colorimétrique graduant le taux moyen d'erreur par page est définie. La tâche synthèse incrémente un compteur d'erreur chaque fois qu'une erreur de parité est détectée pour une page déterminée. L'image est alors formée à partir de la grille dont les carrés représentent les différentes pages du magazine, chaque carré étant coloré par la couleur de l'échelle correspondant au taux d'erreur moyen mesuré pour la page correspondante.

Lorsque la touche 4 est enfoncée, l'utilisateur demande la visualisation directe des codes tels qu'ils sont transmis. L'automate du clavier demande donc également le numéro du magazine à considérer, puis le numéro de la page et vérifie à chaque fois que les réponses données par l'utilisateur sont cohérentes avec les magazines et pages détectés précédemment, lors d'une phase d'analyse transparente. La tâche clavier assure alors la génération des codes de commande pour la tâche synthèse, en mode IV, pour regarder directement les codes d'une image vidéographique. Il est possible de réaliser un traitement supplémentaire dans la tâche synthèse, par exemple pour effectuer une inversion vidéo ou une modification de couleur sur les caractères ainsi saisis sur lesquels une erreur de parité a été détectée. Il est également possible de réaliser une analyse syntaxique pour vérifier la cohérence des caractères ainsi saisis avec le code vidéographique utilisé, par exemple avec le code antiope. Si des erreurs de syntaxe sont détectées, la tâche synthèse affecte les caractères correspondants d'un changement de couleur par exemple.

La tâche de synthèse $T_S$ transmet les codes élaborés aux mémoires 62, 63.

La tâche visualisation, $T_V$, prend les données en mémoire et les convertit en signaux destinés à piloter l'organe de visualisation 5 (figure 1). Cette tâche est en fait celle de l'équipement de réception hôte ; c'est le module chargé d'interpréter le langage de description des images vidéographiques (ANTIOPE dans l'exemple donné). Une touche supplémentaire sur le clavier, peut permettre à l'utilisateur la visualisation sous la forme normale d'une image vidéographique déterminée, par exemple celle pour laquelle aurait été demandée une anlyse de taux d'erreur.

L'invention n'est pas limitée au mode de réalisation précisément décrit ci-dessus qui peut faire l'objet de variantes. En particulier, des boucles d'analyse pour une suite de pages successives peuvent être automatiquement lancées. Par exemple, un index : « auto » a une valeur 1 pour un rafraîchissement en temps réel des données calculées, et une valeur n pour un rafraîchissement toutes les n pages successives transmises d'un même article (une page donnée d'un magazine).

Par ailleurs, d'autres traitements peuvent être effectués sur les données reçues et les données caractéristiques captées ou calculées lors de ces traitements peuvent être visualisées suivant un code quelconque pourvu que des images synthétiques de ces données soient formées sur le terminal de visualisation.

## Revendications

1. Procédé d'analyse de données diffusées, codées suivant une structure organisée en plusieurs niveaux et destinées à être interprétées par un terminal de visualisation vidéographique, caractérisé en ce que :

— dans une première phase, l'opérateur commande la sélection des données d'un niveau déterminé et les analyse suivant l'un ou l'autre de plusieurs modes d'analyse, soit un mode dit transparent, pour extraire les paramètres relatifs aux caractéristiques de la transmission présents dans les données transmises, soit un mode, dit programmé, pour mesurer des paramètres relatifs aux conditions de la transmission, soit un mode, dit de capture, pour mettre en mémoire ces données elles-mêmes avant tout traitement ou interprétation ;

— dans une seconde phase les résultats de l'analyse sont codés, en suivant la norme du terminal de visualisation vidéographique, sous forme d'images synthétiques caractérisant les paramètres extraits ou mesurés, ou les données mises en mémoire avant interprétation ;

— et dans une dernière phase les résultats de l'analyse codés suivant cette norme vidéographique sont interprétés et visualisés.

2. Procédé d'analyse selon la revendication 1, caractérisé en ce que, en mode programmé, l'analyse consiste à saisir, dans les séquences d'interprétation précédant les données proprement dites, les paramètres relatifs à la norme vidéographique, ou à détecter les erreurs dans les données reçues sur un niveau donné.

3. Procédé selon l'une des revendications 1 et 2, caractérisé en ce que, en fonction d'une demande de l'opérateur sont commandées la programmation de la sélection des données, la sélection d'un mode d'analyse et la sélection d'un mode de synthèse associé pour la formation d'images synthétiques à partir des résultats d'analyse.

4. Analyseur de réseau de transmission de données diffusées, codées suivant une structure organisée en plusieurs niveaux et destinées à être interprétées par un terminal de visualisation vidéographique (3, 5), caractérisé en ce qu'il comporte un coupleur programmable (112) pour transmettre les données codées associées à l'un ou l'autre des niveaux de la norme de diffusion, une unité de traitement (2) comportant d'une part un automate ($T_A$) d'analyse des données sélectionnées en mode dit transparent pour l'acquisition de paramètres relatifs aux caractéristiques de la transmission présents dans les données transmises, en mode dit programmé pour la mesure de paramètres relatifs aux conditions de la transmission, ou en mode dit de capture pour la mise en mémoire des données sélectionnées elles-mêmes avant tout traitement ou interprétation, d'autre part un automate de synthèse ($T_S$) pour le codage sous forme synthétique des résultats de l'analyse suivant la norme vidéographique du terminal de visualisation, l'analyseur de réseau utilisant, pour l'affichage des résultats d'analyse codés, le terminal de visualisation vidéographique destiné à la diffusion des données.

5. Analyseur selon la revendication 4, caractérisé en ce qu'il comporte un clavier de commande (50) associé à un automate clavier (T$_C$), pour un dialogue interactif entre l'analyseur et l'opérateur.

6. Analyseur selon la revendication 5, caractérisé en ce que les résultats de l'analyse sont mis en mémoire dans une base de données (242) couplée à l'automate de synthèse, lui-même couplé à la mémoire de stockage des données (62, 63) du terminal de visualisation vidéographique.

7. Analyseur selon l'une des revendications 5 et 6, caractérisé en ce que l'automate clavier (T$_C$) est couplé au coupleur programmable (112), à l'automate d'analyse (T$_A$), et à l'automate de synthèse (T$_S$) par l'intermédiaire d'une mémoire de commande (61).

8. Analyseur selon l'une des revendications 4 à 7, caractérisé en ce que pour la formation des images synthétiques à partir des résultats d'analyse en mode transparent ou programmé, l'automate de synthèse utilise une grille délimitant des carrés, chaque carré étant soit associé à un numéro de magazine et coloré lorsque l'analyse montre que ce magazine est présent, soit associé à un numéro de page d'un magazine et coloré en fonction des attributs de cette page lorsque les résultats d'analyse concernent les attributs des pages, ou coloré en fonction du taux moyen d'erreur par page mesuré lorsque les résultats d'analyse concernent les taux d'erreur.

9. Analyseur selon l'une des revendications 4 à 8, caractérisé en ce que pour la formation des images synthétiques en mode de capture, les données mises en mémoire sont visualisées directement, l'automate de synthèse étant programmé pour détecter les erreurs de parité et de syntaxe et pour effectuer des changements dans la présentation des données visualisées affectées d'erreurs.

10. Equipement de réception utilisant un analyseur suivant l'une quelconque des revendications 4 à 9.

**Claims**

1. Method of analyzing broadcast data which are coded in accordance with an organized structure on a plurality of levels and which are to be interpreted by a videographic visualization terminal, characterized in that :
— in a first phase, the operator controls the selection of the data of a determined level and analyzes them in accordance with one or the other of a plurality of analyzing modes, either a so-called transparent mode for extracting parameters relating to the transmission characteristics and present in the trtansmitted dàta, or a so-called programmed mode for measuring parameters relating to the transmission conditions, or a so-called capture mode for storing these data themselves prior to any processing or interpretation ;
— in a second phase, the results of the analysis are coded in accordance with the standard of the videographic visualization terminal in the form of synthetic images characterizing the extracted or measured parameters or the data stored prior to interpretation :
— and in a last phase, the analysis results coded in accordance with this videographic standard are interpreted and visualized.

2. Analyzing method according to claim 1, characterized in that, in the programmed mode, the analysis consists in capturing, within the interpretation sequences preceding the data proper, the parameters relating to the videographic standard or in detecting the errors in the data received on a given level.

3. Method according to any of claims 1 and 2, characterized in that the programming of the data selection, the selection of an analyzing mode and the selection of an associated synthetizing mode for generating synthetic images from the analyzing results are controlled in function of an operatior demand.

4. Analyzer of a network for the transmission of broadcast data which are coded in accordance with an organized structure on a plurality of levels and which are to be interpreted by a videographic visualization terminal (3, 5) , characterized in that it comprises a programmable coupler (112) for transmitting the coded data associated with one or the other of the levels of the broadcasting standard, a processing unit (2) comprising, on the one hand, an automatic analyzer (T$_A$) for analyzing the data selected in the so-called transparent mode for the acquisition of parameters relating to the characteristics of transmission and present in the transmitted data, and in the so-called programmed mode for the measurement of parameters relating to the transmission conditions, or in the so-called capture mode for the storing of the selected data themselves prior to any processing or interpretation, and, on the other hand, an automatic synthesizer (T$_S$) for the coding of the analyzing results in synthetic form in accordance with the videographic standard of the visualization terminal, the network analyzer using, for displaying the coded analysis results, the videographic visualization terminal to be used for the broadcasting of the data.

5. Analyzer according to claim 4, characterized in that it comprises a control keyboard (50) associated with an automatic keyboard (50) associated with an automatic keyboard (T$_C$) permitting an interactive dialogue between the analyzer and the operator.

6. Analyzer according to claim 5, characterized in that the analyzing results are stored in a data base (242) coupled to the automatic synthesizer which is in turn coupled to the data storage memory (62, 63) of the videographic visualization terminal.

7. Analyzer according to any of claims 5 and 6, characterized in that the automatic keyboard (T$_C$) is coupled to the programmable coupler (112), to the automatic analyzer (T$_A$) and to the automatic synthesizer (T$_S$) through a control memory (61).

8. Analyzer according to any of claims 4 to 7, characterized in that, for generating synthetic images from analyzing results in the transparent or programmed mode, the automatic synthesizer uses a grid defining squares, each square being either associated with a magazine number and colored when the analysis shows that this magazine is present, or associated with a page number of a magazine and colored in function of the properties of this page when the analyzing results relate to the page properties, or colored in function of the measured mean error degree per page when the analyzing results relate to the error degrees.

9. Analyzer according to any of claims 4 to 8, characterized in that, for generating synthetic images in the capture mode, the stored data are directly visualized, the automatic synthesizer being programmed for detecting parity and syntax errors and for performing changes in the presentation of the visualized data affected by errors.

10. Receiver equipment using an analyzer according to any of claims 4 to 9.

**Patentansprüche**

1. Verfahren zur Analyse von Daten, die verbreitet werden und gemäß einer organisierten Struktur auf mehrere Niveaus codiert und dazu bestimmt sind, durch ein videographisches Sicht-Endgerät interpretiert zu werden, dadurch gekennzeichnet, daß

— in einer ersten Phase der Bediener die Auswahl der Daten eines bestimmten Niveaus steuert und sie gemäß der einen oder anderen von mehreren Analysearten analysiert, wobei es sich um eine sogenannte transparente Art zur Gewinnung der in den übertragenen Daten vorhandenen Parameter, welche die Übertragungs-Kenndaten betreffen, um eine sogenannte programmierte Art zur Messung von Parametern, welche die Übertragungsbedingungen betreffen, oder um eine sog. Fangart handelt, um diese Daten selbst vor jeder Verarbeitung oder Interpretation einzuspeichern ;

— in einer zweiten Phase die Analyse-Ergebnisse codiert werden, indem die Norm des videographischen Sicht-Endgerätes befolgt wird, in Form von synthetischen Bildern, welche die gewonnenen oder gemessenen Parameter oder die vor der Interpretation eingespeicherten Daten kennzeichnen und

— in einer letzten Phase die in dieser videographischen Norm codierten Analyse-Ergebnisse interpretiert und angezeigt werden.

2. Analyseverfahren nach Anspruch 1, dadurch gekennzeichnet, daß die programmierte Analyseart darin besteht, daß in den Interpretations-Sequenzen, welche den eigentlichen Daten vorausgehen, die die videographische Norm betreffenden Parameter erfaßt werden oder die Fehler in den auf einem gegebenen Niveau empfangenen Daten festgestellt werden.

3. Verfahren nach Anspruch 1 oder 2, dadurch gekennzeichnet, daß in Abhängigkeit von einer Anforderung des Bedieners die Programmierung der Datenselektion, die Auswahl einer Analyseart und die Auswahl einer zugeordneten Syntheseart zur Erzeugung von synthetischen Bildern aus den Analyse-Ergebnissen gesteuert werden.

4. Analysator für ein Übertragungsnetz, über das Daten verbreitet werden, die gemäß einer organisierten Struktur auf mehreren Niveaus codiert und dazu bestimmt sind, durch ein videographisphes Sicht-Endgerät (3, 5) interpretiert zu werden, dadurch gekennzeichnet, daß er einen programmierbaren Koppler (112) umfaßt, um die codierten Daten zu übertragen, die dem einen oder anderen Niveau der Verbreitungsnorm zugeordnet sind, mit einer Verarbeitungseinheit (2), die einerseits versehen ist mit einem Analyse-Automaten ($T_A$) zur Analyse der in der sogenannten transparenten Art ausgewählten Daten für die Erfassung von in den übertragenen Daten vorhandenen Parametern, welche die Übertragungs-Kenndaten betreffen, zum Messen von die Übertragungsbedingungen betreffenden Parametern in der programmierten Art oder zum Einspeichern der ausgewählten Daten selbst vor jeder Verarbeitung oder Interpretation in der sogenannten Fangart, und andererseits mit einem Synthese-Automaten ($T_S$) zum Codieren der Analyseergebnisse in synthetischer Form gemäß der videographischen Norm des Sicht-Endgerätes, wobei der Netz-Analysator zur Anzeige der codierten Analyse-Ergebnisse das videographische Sicht-Endgerät verwendet, das zur Verbreitung der Daten bestimmt ist.

5. Analysator nach Anspruch 4, dadurch gekennzeichnet, daß er eine Steuertastatur (50) umfaßt, welche einem Tastaturautomaten ($T_C$) zugeordnet ist, um einen interaktiven Dialog zwischen dem Analysator und dem Bediener führen zu können.

6. Analysator nach Anspruch 5, dadurch gekennzeichnet, daß die Analyse-Ergebnisse in einer Datenbasis (242) eingespeichert werden, die an den Synthese-Automaten angekoppelt ist, der seinerseits an den Datenspeicher (62, 63) des videographisphen Sicht-Endgerätes angekoppelt ist.

7. Analysator nach einem der Ansprüche 5 und 6, dadurch gekennzeichnet, daß der Tastatur-Automat ($T_C$) an den programmierbaren Koppler (112), an den Analyse-Automaten ($T_A$) und an den Synthese-Automaten ($T_S$) über einen Steuerspeicher (61) angekoppelt ist.

8. Analysator nach einem der Ansprüche 4 bis 7, dadurch gekennzeichnet, daß zur Erzeugung von synthetischen Bildern aus den Analyse-Ergebnissen in der transparenten oder programmierten Betriebsart der Synthese-Automat ein Gitter verwendet, welches Quadrate umgrenzt, wobei jedes Quadrat entweder einer Magazinnummer zugeordnet und gefärbt ist, wenn die Analyse zeigt, daß dieses Magazin vorhanden ist, oder einer Seitennummer eines Magazins zugeordnet und gefärbt ist in Abhängigkeit von den Eigenschaften dieser Seite, wenn die Analyse-Ergebnisse die Seiteneigenschaften betreffen, oder in Abhängigkeit von der gemessenen mittleren Fehlerquote pro Seite gefärbt ist, wenn die Analyse-Ergebnisse die Fehlerquoten betreffen.

9. Analysator nach einem der Ansprüche 4 bis 8, dadurch gekennzeichnet, daß für die Erzeugung von synthetischen Bildern in der Fangart die eingespeicherten Daten direkt angezeigt werden, wobei der Synthese-Automat derart programmiert ist, daß er die Paritäts- und Syntax-Fehler feststellt und Änderungen in der Darstellung der angezeigten Daten durchführt, die fehlerbehaftet angezeigt werden.

10. Empfangsausrüstung unter Verwendung eines Analysators nach einem der Ansprüche 4 bis 9.

Fig.1

Fig.3

Fig.4

Fig.5